# EUROPEAN PATENT SPECIFICATION

(11) **EP 2 300 375 B1**
(45) Date of publication and mention of the grant of the patent: **15.05.2013**
(21) Application number: 09758010.4
(22) Date of filing: 02.06.2009
(51) Int. Cl.: C02F 1/467, C02F 1/44, C02F 1/461, C02F 103/30

(54) **APPARATUS AND METHOD FOR TREATMENT OF WASTEWATER**
VORRICHTUNG UND VERFAHREN ZUR BEHANDLUNG VON ABWASSER
APPAREIL ET PROCÉDÉ POUR LE TRAITEMENT D EAU RÉSIDUAIRE

(30) Priority: 02.06.2008 US 57893
(43) Date of publication of application: 30.03.2011
(73) Proprietor: Aquaspark Ltd., 12900 Katzrin (IL)
(72) Inventor: KITAEV, Aaron, 14321 Tiberias (IL); RUBANOVICH, Michael, 14365 Tiberias (IL)
(74) Representative: Straus, Alexander
(86) International application number: PCT/IL2009/000547
(87) International publication number: WO 2009/147666

(56) References cited:
- CA-A1- 1 033 686
- CN-A- 101 186 361
- JP-A- 9 253 652
- US-A- 5 004 531
- NOWACK N; ET AL: "ELEKTROCHEMISCHE OXIDATION VON CYANIDEN IN GALVANOTECHNISCHEN ABWAESSERN MITTELS FESTBETTELEKTROLYSE" GALVANOTECHNIK, EUGEN G.LEUZE VERLAG, SAULGAU/WURTT, DE, 1 August 2006 (2006-08-01), pages 1999-2009, XP001500166 ISSN: 0016-4232

## Description

### FIELD OF THE INVENTION

This invention relates to a technique for the treatment of contaminated wastewater, and more particularly to a system and method for the treatment of wastewater with complex organic contamination.

### BACKGROUND OF THE INVENTION

A significant amount of research and development has been undertaken in recent years towards environmental clean-up operations, and in particular to the purification of groundwater and treatment of wastewater containing suspended solids and emulsified and dissolved impurities of different natures. A variety of techniques have been used in the prior art to destroy and/or remove from wastewater various contaminating and toxic materials, such as oil and oil products, heavy metals, organic substances, detergents, suspended solids, emulsions, substances which produce color, taste and odor, and harmful suspended materials.

A technique is known in the art, usually under the name "electro-hydraulics", which utilizes high-energy electrical discharge into a volume of liquid for the purpose of disinfecting water, changing chemical constituents and recovering metals and other substances from liquids or slurries (see, for example, U.S. Pat. Nos. 3,366,564 to Allen; 3,402,120 to Allen et al.; and 4,957,606 to Juvan). According to this technique, an electro-hydraulic shock wave within the liquid, intensive light radiation and thermo-chemical reactions are initiated by arc discharge into a spark gap formed by the electrodes immersed in the liquid. One of the drawbacks of this technique is associated with the fact that in the repeated discharging of a high-energy electrical arc across the gap between electrodes, the electrodes are rather rapidly eroded and burned up.

A hydro-pneumatic method and system for cleaning wastewater from dissolved organic compounds by electric discharges created by applying electric current to a vessel with forced motion of conducting elements filling the vessel is disclosed in Soviet Union (SU) Inventor's Description No. 394324 and in Certificate of Invention SU1583363.

For example, Inventor's Description No. 394324 discloses an apparatus including a cylindrical metallic vessel having perforated walls and a cover, and that operates as a first electrode. A second electrode in the form of a rod or concentric pipe passes through the cover within the inner volume of the vessel. The vessel is filled with conducting elements. The apparatus includes a mixing chamber mounted under the vessel. The mixing chamber is equipped with an inlet pipe providing an inlet flow of wastewater and pressurized air. A second chamber is equipped with an outlet pipe for the clean water, and is located at a top portion of the vessel. Aluminum foil particles of diameter between 3 and 5 mm are used as conducting elements. Permanent motion of the conducting elements within the volume of the vessel is attained by the inflow of the wastewater mixed together with pressurized air from the mixture chamber into the vessel through the perforations of the bottom of the vessel. The electric current applied to the electrodes is of the type that is usually used for welding. For example, consumption of electric energy of 10 to 12 kWh enables decomposition of 95%-98% of the organic matter in one cubic meter of wastewater contaminated to BOD level of about 50,000 mg/l.

Another example of a prior art apparatus can be found in the document CA 1 033 686.

One drawback of the apparatuses described above is associated with the use of aluminum foil particles having low specific gravity as conducting elements, which are employed owing to the desire to minimize the hydro-pneumatic energy needed to maintain motion of the elements. However, the aluminum foil particles tend to stick to each other and to form larger structures when the "welding" electric current is applied. These structures cannot break into smaller parts under the stream of water and pressurized air. As a result, the process of micro electric discharges is adversely influenced with growing risk of obtaining current shortcuts and a complete destruction of the apparatus.

In turn, when conducting elements with lower heat conductivity and higher specific weight are used, higher hydro-pneumatic energy is required to maintain the conducting elements in motion. Accordingly, the larger the hydro-pneumatic energy, the higher the flow rate of the wastewater, i.e., the treated wastewater is within the zone of electric discharge for a shorter time. As a result, effectiveness of the process is significantly lower.

Moreover, in order to obtain a stable formation of micro electric discharge, essential for an effective cleaning process of wastewater, a uniform continuous motion of the conducting elements is needed. To obtain such a motion, the parameters related to the hydro-pneumatic stream (e.g., the relationship between the rates of the wastewater and pressurized air in the hydro-pneumatic stream, the pressure and the velocity of the incoming stream, etc.) must be strictly controlled and regulated. Such regulation is extremely difficult to carry out, and therefore it is not practical in an industrial environment. Moreover, the size of the conducting particles, which plays an important role in determining the parameters of the hydro-pneumatic stream, can change over time, as ions of the particle's material are passed into the water.

### GENERAL DESCRIPTION OF THE INVENTION

Despite the existing prior art in the area of water decontamination techniques, there is still a need in the art for, and it would be useful to have, a novel apparatus and method for treatment of wastewater to rid it from suspended contaminating components, such as oil products dissolved in water, phenols, organic dyes, aromatic compounds, aldehydes, organic acids, biological particles and other organic elements.

It would be advantageous to eliminate the adverse dependence of the hydro-pneumatic method on the hydro-pneumatic stream formed by the flows of wastewater and air, and thereby increase the effectiveness of the treatment process of the prior art systems.

It would also be advantageous to have operation of the apparatus independent of the rate of the flow of the treated wastewater that enables more effective management of the process of micro electric discharge between the conducting elements.

It would also be advantageous to enable the use of conducting elements made of a variety of materials in a variety of geometric forms. In the present description, the terms "conducting elements" and "conducting particles" are used interchangeably.

The present invention satisfies the aforementioned need by providing a novel apparatus and method for separation of treated water from wastewater. The term "wastewater" is broadly used herein to describe any water-based fluid containing one or more contaminating organic components. Examples of the wastewater that can be treated by using the technique of the present invention include, but are not limited to, industrial effluent, municipal sewage, recycled water, landfill leachate, and combinations thereof. Examples of contaminating components that can be in the wastewater include, but are not limited to, oil products dissolved in water, phenols, organic dyes, aromatic compounds, aldehydes, organic acids, biological particles and other organic elements.

Generally, the treatment of wastewater for ridding (i.e., cleaning) from dissolved organic matter is carried out by passing wastewater through agitated conducting elements located between stationary electrodes of a treatment apparatus to which an electric current is applied. The desired agitation is mainly achieved by mechanical agitation of the conducting particles by an electrically powered mixer. Such mechanical agitation is additionally accompanied by pneumatic agitation formed by a stream of pressurized gas that enhances a uniform character of the agitation provided by the mechanical mixing. An example of a gas suitable for the purpose of the present invention includes, but is not limited to compressed atmospheric air.

While the conductive elements move owing to the agitation caused by a mechanical mixer together with pressurized gas, they can be in contact with each other. The controllable agitation can provide a horizontal and vertical movement of the conductive elements and prevent sticking of the particles together and aggregation of large clusters. When a voltage is applied to the electrodes, a difference in electric potential is developed between the adjacent dispersed conductive elements, and an electric discharge with a momentary electric arc between the particles is generated.

In operation, electric discharges with arcs can take place substantially all over the volume of the wastewater passing through the apparatus between the electrodes. Forming the arcs between the conducting elements can result in the formation of ozone, ultraviolet radiation, regions of micro-impulses of heat, pressure, cavitation and other phenomena. The presence of these phenomena in a relatively large volume of liquid provides more effective decomposition of organic compounds.

Thus, in accordance with one general aspect of the present invention, there is provided an apparatus for treating wastewater containing at least one contaminating component. The apparatus includes an entry mixing chamber, a housing, and a collecting chamber.

The entry mixing chamber has tubular chamber walls attached to a chamber bottom and an open mixing chamber top. The tubular chamber walls are equipped with a wastewater inlet port configured for receiving the wastewater and a gas inlet port configured for receiving pressurized gas. According to an embodiment of the present invention, the entry mixing chamber is configured to operate as a cyclone mixer.

The housing has housing walls, an open housing top, and a perforated housing bottom. The housing walls are attached to the open top of the entry mixing chamber to provide hydraulic communication between the entry mixing chamber and the housing.

The collecting chamber is mounted on the open housing top to provide hydraulic communication between the collecting chamber and the housing. The collecting chamber has a wastewater outlet port for discharge of the treated wastewater. The collecting chamber can have a gas outlet port for release of the pressurized gas.

The apparatus further includes a first electrode and a second electrode arranged within the housing and coupled to a voltage power supply, and a conductive particulate material placed between the first and second electrodes and partially filling a space between the electrodes. Examples of the conductive particulate material include, but are not limited to, graphite, titanium, aluminum, iron, stainless steel and a combination thereof. A dimension of particles of the conductive particulate material can, for example, be in the range of about 3 to about 5 millimeters. The conducting particles can have a variety of geometric shapes. It should be noted that conductive particulate material can be chosen by taking into account the possibility of using its ions for coagulation of the products of the decomposition of the contaminating organic compounds.

The apparatus also includes an electrically powered mixer configured to provide mechanical agitation. The electrically powered mixer includes an axle equipped with one or more whirling blades. The axle passes through the housing such that the whirling blades are located within the conductive particulate material. The electrically powered mixer comprises an electric driver configured for rotating the axle. The operation of the mixer may result in the increase of the "effective volume" of the conducting particles by about 8% - 22%, as compared to the non-moving particles. The effective volume here is the volume where the electric discharges between the particles are formed.

According to one embodiment of the present invention, the housing has an electrically conductive inner surface that operates as the first electrode. The second electrode includes a pipe arranged within the housing along a longitudinal axis of the housing. The axle passes through a cavity of the pipe.

According to another embodiment of the present invention, the first and second electrodes can be grid electrodes. The first electrode can include a conductive perforated plate arranged near the housing bottom perpendicular to the housing walls. The second electrode can include a conductive perforated plate arranged in a parallel relationship with the conductive perforated plate of the first electrode. The housing can be made of a dielectric material. A cross-sectional dimension of holes in the conductive perforated plates of the first and second electrodes is less than a dimension of particles of the conductive particulate material. This feature prevents penetration of the agitated particles of the conductive particulate material into the holes of the perforated plates and flushing the particulate material from the housing together with the wastewater.

According to one embodiment of the present invention, the electrically powered mixer includes a plurality of whirling blades arranged on the axle along its longitudinal axis. A distribution of the whirling blades along the axle and distance between them can be varied to establish an optimal mixing condition. Likewise, a broad variety of profile blades in the mechanical mixer can be used. The whirling blades can, for example, be arranged at angles in the range of about 30° to 60° with respect to the plane of rotation.

According to one embodiment of the present invention, the wastewater inlet port can be coupled to an inlet manifold equipped with a controllable inlet valve configured for regulating a flow rate of ingress of wastewater. The wastewater outlet port can be coupled to an outlet manifold equipped with a controllable outlet valve configured for regulating a flow rate of egress of the treated wastewater.

According to another general aspect of the present invention, there is provided a method for treating industrial wastewater. The method includes providing an apparatus described above. A controllable ingress flow of the wastewater is fed into the entry mixing chamber through the wastewater inlet port. Simultaneously with the wastewater, a controllable ingress flow of the pressurized gas is fed into the entry mixing chamber through the gas inlet port. The electrically powered mixer is activated to provide controllable agitation of particles of the conductive particulate material. The axle of the mixer can, for example, be rotated at a speed in the range of about 50 to about 1000 revolutions per minute.

Moreover, a predetermined electric voltage is applied to the first and second electrodes. A power supply of direct or alternate current may be used. For example, the predetermined electric voltage can be in the range of about 10V (volts) to 40V in order to maintain the electric current in the range of about 50A (amperes) to 500A.

After treatment, the treated wastewater can be discharged from the housing through the wastewater outlet port.

When desired, the wastewater from the outlet port can be supplied downwardly to a separator for separation of sludge from water. The separator can include one or more filters or other known separating devices configured for filtering the treated wastewater for separation of the cleaned water from the sludge.

The method and apparatus of the present invention have many of the advantages of the techniques mentioned theretofore, while simultaneously overcoming some of the disadvantages normally associated therewith.

The method and apparatus of the present invention can be applied both for decomposition of organic industrial contaminating components and for disinfection of wastewater.

Since agitation of the particles in the apparatus of the present invention does not only rely on the stream formed by the flows of the wastewater and gas, but also includes the mechanical agitation of the conducting particles by a mechanical mixer, contrary to the known hydro-pneumatic technique, the time during which the treated wastewater is in contact with the micro electric discharge zone is not limited by the hydro-pneumatic parameters of the stream. Accordingly, the treatment can be maintained as long as required, and the treatment time can be varied to obtain optimal conditions of cleaning and energy consumption.

Accordingly, the replacing of the pure hydro-pneumatic method for maintaining continuous and stable motion of the conducting particles by combined mechanical and hydro-pneumatic agitation, enables the use of conducting elements made of a variety of materials being in a variety of geometric forms. Indeed, since mechanical mixing is also used, there is no dependency between the specific gravity of the conducting elements and the formation process of micro electric discharge. As a result, a variety of conducting materials can be used for producing the conducting particles, such as graphite, titanium, aluminum, iron, stainless steel etc. Aluminum foils, in particular, can also be used, since mechanical mixing can break the aluminum foil clusters formed during the micro electric discharge.

When iron or aluminum particles are used as conducting elements, ions of iron or aluminum, which enter the water during the micro electric discharges, may be used for coagulation of some of the products of decomposition of the organic compounds, thus providing an additional mechanism for removing dissolved organic matter from the wastewater.

Further, the method and apparatus of the present invention allow increasing the flow rate of the wastewater through the apparatus, thereby enhancing the overall process of fluid purification. The mechanical mixing used in the apparatus eliminates the link between the rate of the ingress wastewater flow and the process of micro electric discharge. This rate can therefore be modified for optimal treatment results, namely the required level of decomposition of organic compounds with minimal energy consumption.

The method and apparatus of the present invention are highly economical and operate with minimal losses of energy and chemicals. For the consumption of electric energy, for example, in the range of about 10 - 12 kWh per one cubic meter of treated wastewater, the concentration of organic compounds (in wastewater with BOD in the range of about 20,000 to about 100,000 mg/l) can be decreased by 95-98%, whereas the concentration of living organisms (e.g., microbes) can be decreased by 98 - 100%.

The apparatus according to the present invention may be easily and efficiently fabricated and marketed.

The apparatus according to the present invention is of durable and reliable construction.

The apparatus according to the present invention may have a relatively low manufacturing cost.

There has thus been outlined, rather broadly, the more important features of the invention so that the detailed description thereof that follows hereinafter may be better understood, and the present contribution to the art may be better appreciated. Additional details and advantages of the invention will be set forth in the detailed description.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is a schematic cross-sectional view of an apparatus for treatment of industrial wastewater, according to one embodiment of the present invention; and
**Fig. 2** is a schematic cross-sectional view of an apparatus for treatment of industrial wastewater, according to another embodiment of the present invention.

### DETAILED DESCRIPTION OF EMBODIMENTS

The principles and operation of the apparatus and method for treatment of wastewater according to the present invention may be better understood with reference to the drawings and the accompanying description. It should be understood that these drawings are given for illustrative purposes only and are not meant to be limiting. It should be noted that the figures illustrating various examples of the apparatus of the present invention are not to scale, and are not in proportion, for purposes of clarity. It should be noted that the blocks as well other elements in these figures are intended as functional entities only, such that the functional relationships between the entities are shown, rather than any physical connections and/or physical relationships. The same reference numerals and alphabetic characters will be utilized for identifying those components which are common in the apparatus for treatment of wastewater and its components shown in the drawings throughout the present description of the invention. Examples of constructions are provided for selected elements. Those versed in the art should appreciate that many of the examples provided have suitable alternatives which may be utilized.

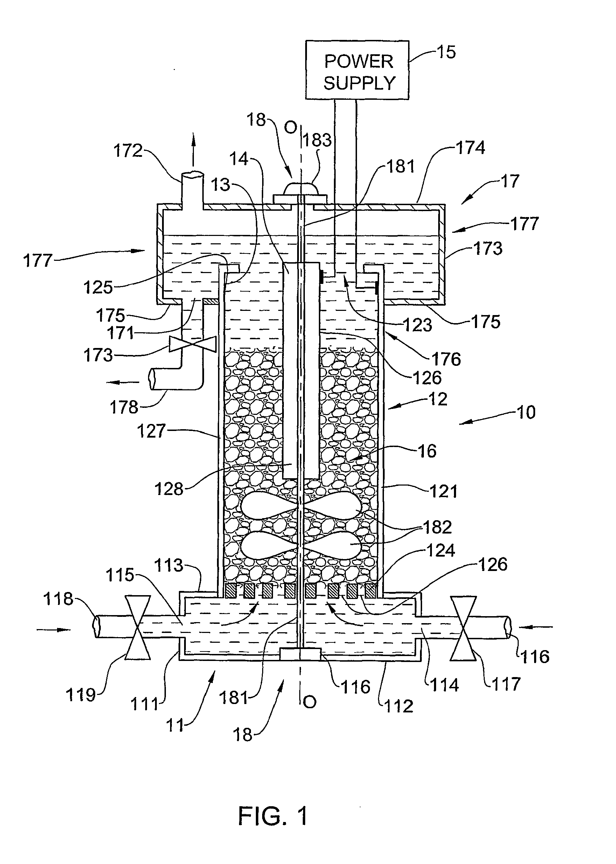

Referring to **Fig. 1****,** a schematic cross-sectional view of an apparatus **10** for treatment of industrial wastewater containing one or more contaminating components is illustrated, according to one embodiment of the present invention. Examples of the contaminating components include, but are not limited to oil products dissolved in water, phenols, organic dyes, aromatic compounds, aldehydes, organic acids, biological particles and other organic elements.

Generally, the apparatus **10** includes an entry mixing chamber **11,** a housing **12,** and a collecting chamber **17.**

The entry mixing chamber **11** has tubular chamber walls **111** attached to a chamber bottom **112** and an open mixing chamber top **113.** The entry mixing chamber is configured to operate as a cyclone mixer. The chamber walls **111** are equipped with a wastewater inlet port **114** configured for receiving the wastewater and with a gas inlet port **115** configured for receiving pressurized gas. An example of the pressurized gas suitable for the purpose of the present invention includes, but is not limited to compressed atmospheric air. The entry mixing chamber **11** can be constructed of a suitable metal, plastic or composite material with thickness of the walls appropriate to withstand the strain on the walls caused by the wastewater and gas pressure inside the entry mixing chamber **11.**

The housing **12** comprises housing walls **121,** an open housing top **123,** and a perforated housing bottom **124.** The housing walls **121** are attached to the open top **113** of the entry mixing chamber **11** to provide hydraulic communication between the entry mixing chamber **11** and the housing **12.** Shape of the housing **12** can, for example, be tubular. However, it should be understood that generally, any other desired shape of the housing **12** can be used. The housing **12** can be constructed of a suitable metal, plastic or composite material with thickness of the walls appropriate to withstand the strain on the walls caused by the wastewater and gas pressure inside the housing **12.**

The apparatus **10** also includes a collecting chamber **17** mounted on the open housing top **123** to provide hydraulic communication between the collecting chamber **17** and the housing **12.** The collecting chamber **17** comprises collecting chamber walls **173,** a top **174** and a bottom **175** having an opening **176** matching the open housing top **123.** The collecting chamber **17** has a projecting part **177.** Preferably, but not mandatory, the bottom **175** of the collecting chamber **17** in the projecting part **177** is arranged below the upper end **125** of the housing walls **121.** The collecting chamber **17** has a wastewater outlet port **171** for discharge of the treated wastewater. The wastewater outlet port **171** is arranged at the bottom **175** of the collecting chamber **17** in the projecting part **177.** The collecting chamber **17** can have a gas outlet port **172** for release of the pressurized gas. The gas outlet port **172** can be arranged at the top **174.** Shape of the collecting chamber **17** can, for example, be tubular. However, it should be understood that generally, any other desired shape of the collecting chamber **17** can be used. The collecting chamber **17** can be constructed of a suitable metal, plastic or composite material with thickness of the walls appropriate to withstand the strain on the walls caused by the wastewater and gas pressure inside collecting chamber **17.**

The apparatus **10** further includes a first electrode **13** and a second electrode **14** arranged within the housing **12** and coupled to a voltage power supply **15.** According to the embodiment shown in **Fig. 1****,** the housing **12** has an electrically conductive inner surface **125** that is associated with the first electrode **13.** The second electrode **14** includes a pipe **126** made of an electrically conductive material. The pipe **126** is arranged within the housing **12** along a longitudinal axis **O** of the housing **12.** When desired, the outer surface **127** of the housing walls **121** can be made of or covered with an electrically nonconductive material.

The power supply **15** can be powered either from a commercial AC power line (not shown) or from an autonomous generator of electric energy. The power supply **15** can be either a direct current (DC) power supply or an alternating current (AC) power supply. For example, the power supply can operate in the range of about 10 volts to about 40 volts and is capable of maintaining the electric current in the range of about 50A (amperes) to 500A. The DC power supply can, for example, be a conventional rectifier configured to transform alternating current (AC) power obtained from the AC power line into a DC output or pulsating DC output.

The apparatus **10** also includes a conductive particulate material **16** placed between the first and second electrodes **13** and **14,** and partially filling a space between the first and second electrodes **13** and **14.** Examples of the conductive particulate material **16** include, but are not limited to, graphite, titanium, aluminum, iron, stainless steel and a combination thereof. A dimension of particles of the conductive particulate material can, for example, be in the range of about 3 to about 5 millimeters. The conducting particles can have a variety of geometric shapes. It should be noted that ions of conductive particulate material **16** can also be used for coagulation of the products of the decomposition of the contaminating organic compounds. Accordingly, a choice of the conductive particulate material **16** for a certain treatment depends on the level of contamination and on the type of contaminating components in the wastewater under the treatment.

It should be noted here that a cross-sectional dimension of holes **126** in the perforated bottom **113** of the housing **12** is less than a dimension of the particles of the conductive particulate material **16.** This feature prevents penetration of the particles into the holes **126.**

The apparatus **10** further includes an electrically powered mixer **18.** The electrically powered mixer **18** comprises an axle **181** equipped with one or more whirling blades **182** and mechanically connected to an electric driver **183** configured for rotating the axle **181.** The axle **181** passes from the electric driver **183** through the collecting chamber **17,** through the housing **12,** and then through the entry mixing chamber **11** where it is mechanically connected to a supporting bearing **116** mounted at the bottom **112** of the entry mixing chamber **11.** According to the embodiment shown in **Fig. 1****,** the axle **181** passes through a cavity **128** of the second pipe electrode **14** arranged in the housing **11.** The axle **181** is arranged in the housing **11** such that the whirling blades **182** are located within the conductive particulate material **16.**

Preferably, the electrically powered mixer includes a plurality of whirling blades **182** arranged on the axle **181** along its longitudinal axis. A distribution of the whirling blades **182** along the axle and distance between them can be varied to establish an optimal mixing condition. Likewise, a broad variety of profile blades in the mechanical mixer can be used. The whirling blades can, for example, be arranged at angles in the range of about 30° to 60° with respect to the plane of rotation.

According to a further embodiment of the present invention, the wastewater inlet port **114** can be coupled to a wastewater inlet manifold **116** equipped with a controllable inlet valve **117** configured for regulating a flow rate of ingress of wastewater. The gas inlet port **115** can be coupled to a gas inlet manifold **118** equipped with a controllable inlet valve **119** configured for regulating a flow rate of ingress of gas. Likewise, the wastewater outlet port **171** can be coupled to a water outlet manifold **178** equipped with a controllable outlet valve **173** configured for regulating a flow rate of egress of the treated wastewater.

When desired, the apparatus **10** can further include a separator (not shown) coupled to the water outlet manifold **178** and configured for separation of sludge from water. The separator can include one or more filters or other known separating devices configured for filtering the treated wastewater for separation of the cleaned water from the sludge.

The apparatus can be controlled by a control system (not shown) including several conventional sensing and control devices. Examples of the sensing and control devices include, but are not limited to, pressure and/or flow sensors, water quality sensors, water meters, pumps, as well as other similar or suitable devices. Each may be a commercially available component. The water quality sensors can, for example, be arranged at any desired location along the wastewater flow. Examples of the water quality sensor include turbidity meters, biosensors, biological sensors, and other similar, suitable, and conventional devices.

In operation, a controllable ingress flow of wastewater is provided into the entry mixing chamber **11** through the wastewater inlet port **114.** A controllable ingress flow of pressurized gas is provided into the entry mixing chamber **11** through the gas inlet port **115.** The mixed wastewater and pressurized air pass upwardly through the perforated housing bottom **124** into the housing, which is filled with the conductive particulate material **16** placed between the first and second electrodes.

The particles of the conductive particulate material **16** together with the wastewater and gas are brought into a controllable agitation state by means of the electrically powered mixer **18.** In the agitation state, the particles can be maintained in continuous motion both in the vertical and the horizontal directions. While the conductive particles move owing to the agitation caused by a mechanical mixer together with wastewater and pressurized gas, the particles can be contact with each other. The controllable agitation can provide a horizontal and vertical movement of the conductive particles and prevent sticking of the particles together and aggregation of large clusters. Accordingly, an "apparent" (or "dynamic") volume occupied by the moving conducting particles can be larger than the volume of the conducting elements, for example, by 8% - 22 % than the volume when the particles are at rest. This apparent volume can be varied by changing the rotation speed of the axle **181** with the whirling blade **182** arranged within the conductive particulate material **16.**

When a predetermined electric voltage from the power supply **15** is applied across the first and second electrodes **13** and **14** a difference in electric potential is developed between the adjacent dispersed conductive elements. The electric current can controllably flow through the mixture of the wastewater and the conductive particulate material **16** placed between the first and second electrodes **13** and **14,** thereby generating an electric discharge with a momentary electric arc between the particles. In operation, electric discharges with arcs can take place substantially all over the volume of the wastewater passing through the apparatus between the electrodes. The arcs formed between the conducting elements can result in the formation of ozone, ultraviolet radiation, regions of micro-impulses of heat, pressure, cavitation and other phenomena. The presence of these phenomena in a relatively large volume of liquid provides more effective decomposition of organic compounds dissolved in the wastewater.

The density of the micro electric discharge phenomena depends on the properties of the conducting particles, and can be regulated by modifying the rotational velocity of the electrically powered mixer **18.**

In order to ensure required decomposition of the organic matter, wastewater passing through the apparatus can be maintained in contact with the micro electric discharge zone as long as required. The treatment time is not limited by hydro-pneumatic parameters of the wastewater and pressurized gas, and can be sufficient to obtain optimal results.

The treated wastewater from the housing can be discharged through the wastewater outlet port **171** together with the sludge that remains in the water, while the gaseous products of decomposition and the pressurized gas can be released into the atmosphere through the gas outlet port **172**.

When desired, the wastewater outlet port **171** together with the sludge that remains in the water can be further treated in the separator (not shown) coupled to the water outlet manifold **178** and configured for separation of sludge from water. The separation can, for example, be achieved by filtering the treated wastewater for separation of cleaned water from sludge. The cleaned water provided by the separator can then be supplied to any technological processes or can be dumped in a sewerage network (not shown). In turn, the sludge can be further dewatered by a filter press (not shown) arranged downstream of the separator, and after the dewatering, it can be packed and stored.

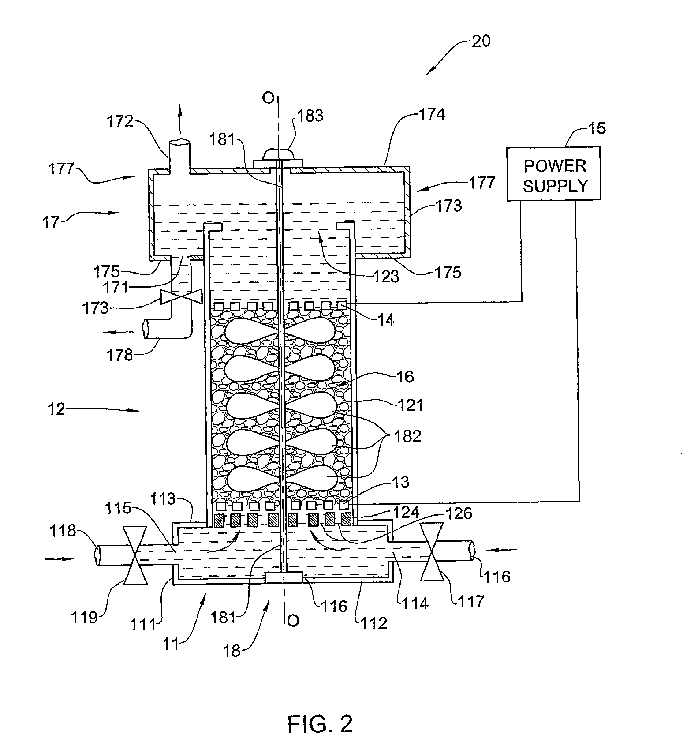

Referring to **Fig. 2****,** a schematic cross-sectional view of an apparatus **20** for treatment of industrial wastewater containing one or more contaminating components is illustrated, according to another embodiment of the present invention. The apparatus **20** has mainly the same main parts of the apparatus (**10** in **Fig. 1**), however differs in the construction of the first and second electrodes.

Specifically, the apparatus **20** includes the entry mixing chamber **11** that has tubular chamber walls **111** attached to a chamber bottom **112** and an open mixing chamber top **113.** The entry mixing chamber is configured to operate as a cyclone mixer. The chamber walls **111** are equipped with a wastewater inlet port **114** configured for receiving the wastewater and with a gas inlet port **115** configured for receiving pressurized gas.

The housing **12** comprises housing walls **121,** an open housing top **123,** and a perforated housing bottom **124.** The housing walls **121** are attached to the open top **113** of the entry mixing chamber **11** to provide hydraulic communication between the entry mixing chamber **11** and the housing **12.** According to this embodiment, the housing is made of a dielectric material.

The apparatus **20** also includes a collecting chamber **17** mounted on the open housing top **123** to provide hydraulic communication between the collecting chamber **17** and the housing **12.** The collecting chamber **17** comprises collecting chamber walls **173,** a top **174** and a bottom **175** having an opening **176** matching the open housing top **123.** The collecting chamber **17** has a wastewater outlet port **171** for discharge of the treated wastewater. The wastewater outlet port **171** is arranged at the bottom **175** of the collecting chamber **17.** The collecting chamber **17** can have a gas outlet port **172** for release of the pressurized gas. The gas outlet port **172** can be arranged at the top **174.**

The apparatus **20** further includes a first electrode **13** and a second electrode **14** arranged within the housing **12** and coupled to a voltage power supply **15**. According to the embodiment shown in **Fig. 2****,** the first and second electrodes **13** and **14** are grid electrodes. The first electrode **13** can include a conductive perforated plate arranged near the housing bottom **124** perpendicular to the housing walls **121.** The second electrode **14** can include a conductive perforated plate arranged in a parallel relationship with the conductive perforated plate of the first electrode **13.**

The apparatus **20** also includes a conductive particulate material **16** placed between the first and second electrodes **13** and **14,** and partially filling a space between the first and second electrodes **13** and **14.** Examples of the conductive particulate material **16** include, but are not limited to, graphite, titanium, aluminum, iron, stainless steel and a combination thereof. The conducting particles can have a variety of geometric shapes, and be in the range of about 3 to about 5 millimeters.

A cross-sectional dimension of holes in the conductive perforated plates of the first and second electrodes **13** and **14** is less than a dimension of particles of the conductive particulate material **16.** This feature prevents penetration of the agitated particles of the conductive particulate material **16** into the holes of the perforated plates and flushing the particulate material **16** from the housing together with the wastewater.

The power supply **15** coupled to the first and second electrodes **13** and **14** can be powered either from a commercial AC power line (not shown) or from an autonomous generator of electric energy. The power supply **15** can be either a direct current (DC) power supply or an alternating current (AC) power supply. For example, the power supply can operate in the range of about 10 volts to about 40 volts and is capable of maintaining the electric current in the range of about 50A (amperes) to 500A.

The apparatus **20** further includes an electrically powered mixer **18** that comprises an axle **181** equipped with one or more whirling blades **182** and mechanically connected to an electric driver **183** configured for rotating the axle **181.** The axle **181** passes from the electric driver **183** through the collecting chamber **17,** through the housing **12,** and then through the entry mixing chamber **11** where it is mechanically connected to a supporting bearing **116** mounted at the bottom **112** of the entry mixing chamber **11.** The axle **181** is arranged in the housing **11** such that the whirling blades **182** are located within the conductive particulate material **16.** A distribution of the whirling blades **182** along the axle and distance between them can be varied to establish an optimal mixing condition. Likewise, a broad variety of profile blades in the mechanical mixer can be used. The whirling blades can, for example, be arranged at angles in the range of about 30° to 60° with respect to the plane of rotation.

The controllable agitation of the conductive material **16** can provide a horizontal and vertical movement of the conductive particles and prevent sticking of the particles together and aggregation of large clusters. Accordingly, an "apparent" (or "dynamic") volume occupied by the moving conducting particles can be larger than the volume of the conducting elements, for example, by 8% - 22 % than the volume when the particles are at rest. This apparent volume can be varied by changing the rotation speed of the axle **181** with the whirling blade **182** arranged within the conductive particulate material **16.**

According to a further embodiment of the present invention, the wastewater inlet port **114** can be coupled to a wastewater inlet manifold **116** equipped with a controllable inlet valve **117** configured for regulating a flow rate of ingress of wastewater. The gas inlet port **115** can be coupled to a gas inlet manifold **118** equipped with a controllable inlet valve **119** configured for regulating a flow rate of ingress of gas. Likewise, the wastewater outlet port **171** can be coupled to the water outlet manifold **178** equipped with the controllable outlet valve **173** configured for regulating a flow rate of egress of the treated wastewater.

When desired, the apparatus **20** can further include a separator (not shown) coupled to the water outlet manifold **178** and configured for separation of sludge from water. The separator can include one or more filters or other known separating devices configured for filtering the treated wastewater for separation of cleaned water from sludge.

The apparatus can be controlled by a control system (not shown) including several conventional sensing and control devices. Examples of the sensing and control devices include, but are not limited to, pressure and/or flow sensors, water quality sensors, water meters, pumps, as well as other similar or suitable devices. Each may be a commercially available component. The water quality sensors can, for example, be arranged at any desired location along the wastewater flow. Examples of the water quality sensors that can be used in the apparatus of the present invention include, but are not limited to, turbidity meters, biosensors, biological sensors, and other similar, suitable, and conventional devices.

The operation of apparatus **20** can be likened to the operation of the apparatus (**10** in **Fig.1**), *mutatis mutandis.*

Specifically, a controllable ingress flow of wastewater is provided into the entry mixing chamber **11** through the wastewater inlet port **114.** A controllable ingress flow of pressurized gas is provided into the entry mixing chamber **11** through the gas inlet port **115.** The mixed wastewater and pressurized air pass upwardly through the perforated housing bottom **124** into the housing, which is filled with the conductive particulate material **16** placed between the first and second electrodes.

The particles of the conductive particulate material **16** together with the wastewater and gas are brought into a controllable agitation state by means of the electrically powered mixer **18.** In the agitation state, the particles can be maintained in continuous motion both in the vertical and the horizontal directions. The controllable agitation can prevent sticking of the particles together and aggregation of large clusters. The apparent volume occupied by the moving conducting particles can be varied by changing the rotation speed of the axle **181** with the whirling blade **182** arranged within the conductive particulate material **16.**

When a predetermined electric voltage from the power supply **15** is applied across the first and second electrodes **13** and **14,** a difference in electric potential is developed between the adjacent dispersed conductive elements. The electric current flowing through the mixture of the wastewater and the conductive particulate material **16** placed between the first and second electrodes **13** and **14,** can generate an electric discharge with momentary electric arcs between the particles. In operation, electric discharges with arcs can take place substantially all over the volume of the wastewater passing through the apparatus between the electrodes. The arcs formed between the conducting elements can result in the formation of ozone, ultraviolet radiation, regions of micro-impulses of heat, pressure, cavitation and other phenomena. The presence of these phenomena in a relatively large volume of liquid provides more effective decomposition of organic compounds dissolved in the wastewater. The density of the micro electric discharge phenomena depends on the properties of the conducting particles, and can be regulated by modifying the rotational velocity of the electrically powered mixer **18.**

According to an embodiment, a surface area of the first electrode **13** exposed to the conductive material is equal to the surface area of the second electrode **14.** This provision may result in a more uniform distribution of the arc formation through the entire volume of the agitated conductive particles.

It should be noted that the configuration of the first and second electrodes **13** and **14** provided by the embodiment shown in **Fig. 2** enables prevention of formation of a short circuit state between the electrodes **13** and **14,** that may happen in the case of malfunction of the electrically powered mixer or uncontrolled decrease of the flows of the wastewater and/or gas passing through the apparatus. In the case of the faulty functioning of the mixer and/or supply of the wastewater, the "dynamic" volume occupied by the moving conducting particles decreases. The decrease of the volume of the conductive material results in the formation of a nonconductive gap between the conducting material **16** and the second electrode **14** that results in break of the current between the electrodes **13** and **14.** Thus, the apparatus according to this embodiment has more durable and reliable construction and operates more safely, when compared to the apparatuses in which the conducting material is always in contact with the electrodes.

In order to ensure required decomposition of the organic matter, wastewater passing through the apparatus can be maintained in contact with the micro electric discharge zone as long as required. The treatment time is not limited by hydro-pneumatic parameters of the wastewater and pressurized gas, and can be sufficient to obtain optimal results.

As such, those skilled in the art to which the present invention pertains, can appreciate that while the present invention has been described in terms of preferred embodiments, the concept upon which this disclosure is based may readily be utilized as a basis for the designing of other structures, systems and processes for carrying out the several purposes of the present invention.

Also, it is to be understood that the phraseology and terminology employed herein are for the purpose of description and should not be regarded as limiting.

Finally, it should be noted that the word "comprising" as used throughout the appended claims is to be interpreted to mean "including but not limited to".

It is important, therefore, that the scope of the invention is not construed as being limited by the illustrative embodiments set forth herein. Other variations are possible within the scope of the present invention as defined in the appended claims.

## Claims

1. An apparatus for treating wastewater, comprising:
an entry mixing chamber (11) having tubular chamber walls (111) attached to a chamber bottom (112) and an open mixing chamber top (113), the chamber walls (111) being equipped with a wastewater inlet port (114) configured for receiving wastewater, and with a gas inlet port (115) configured for receiving pressurized gas and spaced apart from said wastewater inlet port (114);
a housing (12) comprising housing walls (121), an open housing top (123), and a perforated housing bottom (124), the housing walls (121) being attached to the open top (113) of said entry mixing chamber (11) to provide a hydraulic communication between the entry mixing chamber (11) and the housing (12);
a first electrode (13) and a second electrode (14) arranged within the housing (12) and coupled to a voltage power supply (15);
a conductive particulate material (16) placed between the first and second electrodes (13 and 14) and partially filling a space therebetween to contact the first and second electrodes (13 and 14); thereby to provide electric discharges between the particles with arcs substantially all over the volume of the wastewater passing through the housing (12) between the first and second electrodes (13 and 14);
a collecting chamber (17) mounted on the open housing top (123) to provide a hydraulic communication between the collecting chamber (17) and the housing (12), said collecting chamber (17) having a wastewater outlet port (171) for discharge of the treated wastewater; and
an electrically powered mixer (18) comprising an axle (181) equipped with at least one whirling blade (182) and passing through the housing (12) such that said at least one whirling blade (182) is located within the conductive particulate material (16).

2. The apparatus of claim 1, wherein said entry mixing chamber is configured to operate as a cyclone mixer.

3. The apparatus of claim 1, wherein said first electrode (13) includes a conductive perforated plate arranged near the perforated housing bottom (124) perpendicular to the housing walls (121).

4. The apparatus of claim 3, wherein said second electrode (14) includes a conductive perforated plate arranged in a parallel relationship with the conductive perforated plate of the first electrode (13).

5. The apparatus of claim 1, wherein the first and second electrodes (13 and 14) are grid electrodes.

6. The apparatus of claim 1, wherein said housing (12) has an electrically conductive inner surface (125) that operates as said first electrode (13).

7. The apparatus of claim 6, wherein said second electrode (14) includes a pipe (126) arranged within the housing (12) along a longitudinal axis (O) of the housing (12).

8. The apparatus of claim 1, wherein a dimension of particles of said conductive particulate material (16) is in the range of about 3 to about 5 millimeters.

9. The apparatus of claim 1, wherein said electrically powered mixer (18) includes a plurality of whirling blades (182) arranged on the axle (181) along its longitudinal axis.

10. The apparatus of claim 1, wherein the wastewater inlet port (114) is coupled to an inlet manifold (116) equipped with a controllable inlet valve (117) configured for regulating a flow rate of ingress of wastewater, wherein the gas inlet port (115) is coupled to a gas inlet manifold (118) equipped with a controllable inlet valve (119) configured for regulating a flow rate of ingress of gas.

11. The apparatus of claim 1, wherein the wastewater outlet port (171) is coupled to a water outlet manifold (178) equipped with a controllable outlet valve (173) configured for regulating a flow rate of egress of the treated wastewater.

12. The apparatus of claim 1, wherein said electrically powered mixer (18) comprises an electric driver (183) configured for rotating the axle (181).

13. A method for treating industrial wastewater, comprising:
providing the apparatus of any one the preceding claims;
providing a controllable ingress flow of the wastewater into the entry mixing chamber (11) through said wastewater inlet port (114);
providing a controllable ingress flow of the pressurized gas into the entry mixing chamber (11) through said gas inlet port (115);
activating said electrically powered mixer (18) to provide controllable agitation of particles of said conductive particulate material (16);
applying a predetermined electric voltage to said first and second electrodes (13 and 14); to contact the first and second electrodes (13 and 14), thereby providing electric discharges between the particles with arcs substantially all over the volume of the wastewater passing through the housing (12) between the first and second electrodes (13 and 14); and
discharging the treated wastewater from the housing through the wastewater outlet port (171).

14. The method of claim 13, wherein said activating of the electrically powered mixer (18) includes rotating the axle (181) at a speed in the range of about 50 to about 1000 revolutions per minute.

15. The method of claim 13 or 14, wherein said predetermined electric voltage is in the range of about 10V to 40V.

## Patentansprüche

1. Vorrichtung zur Abwasserbehandlung, umfassend:
eine Einlassmischkammer (11) mit röhrenförmigen Kammerwänden (111), die an einer Kammerunterseite (112) und einer offenen Mischkammeroberseite (113) angebracht sind, worin die Kammerwände (111) mit einem Abwassereinlassanschluss (114) ausgerüstet sind, der zur Aufnahme von Abwasser angepasst ist, und mit einem Gaseinlassanschluss (115), der zur Aufnahme von unter Druck stehenden Gases ausgestaltet ist und von dem Abwassereinlassanschluss (114) beabstandet ist;
ein Gehäuse (12) umfassend Gehäusewände (121), eine offene Gehäuseoberseite (123), und eine perforierte Gehäuseunterseite (124), worin die Gehäusewände (121) an der offenen Oberseite (113) der Einlassmischkammer (11) angebracht sind, um eine hydraulische Verbindung zwischen der Einlassmischkammer (11) und dem Gehäuse (12) bereitzustellen;
eine erste Elektrode (13) und eine zweite Elektrode (14), die in dem Gehäuse (12) angeordnet sind und mit einer Spannungsquelle (15) verbunden sind;
ein leitfähiges, teilchenförmiges Material (16), das zwischen der ersten und zweiten Elektrode (13 und 14) angeordnet ist und einen Raum dazwischen teilweise ausfüllt, um mit der ersten und zweiten Elektrode (13 und 14) in Kontakt zu treten; wodurch elektrische Entladungen zwischen den Teilchen mit Bogenentladungen im Wesentlichen über das gesamte Abwasservolumen bereitzustellen, die das Gehäuse (12) zwischen der ersten und zweiten Elektrode (13 und 14) durchlaufen;
eine Sammelkammer (17), die an der offenen Gehäuseoberseite (123) befestigt ist, um zwischen der Sammelkammer (17) und dem Gehäuse (12) eine hydraulische Verbindung bereitzustellen, worin die Sammelkammer (17) einen Abwasserauslassanschluss (171) zum Abführen des behandelten Abwassers aufweist; und
einen elektrisch betriebenen Mixer (18) umfassend eine Welle (181), die mit mindestens einem Wirbelblatt (182) ausgerüstet ist und durch das Gehäuse (12) verläuft, so dass das mindestens eine Wirbelblatt (182) in dem leitfähigen, teilchenförmigen Material (16) angeordnet ist.

2. Vorrichtung nach Anspruch 1, worin die Einlassmischkammer zu einem Betrieb als Zyklon-Mixer ausgestaltet ist.

3. Vorrichtung nach Anspruch 1, worin die erste Elektrode (13) eine leitfähige, perforierte Platte umfasst, die nahe der perforierten Gehäuseunterseite (124) senkrecht zu den Gehäusewänden (121) angeordnet ist.

4. Vorrichtung nach Anspruch 3, worin die zweite Elektrode (14) eine leitfähige, perforierte Platte umfasst, die in einer parallelen Beziehung zu der leitfähigen, perforierten Platte der ersten Elektrode (13) angeordnet ist.

5. Vorrichtung nach Anspruch 1, worin die erste und zweite Elektrode (13 und 14) Raster-Elektroden sind.

6. Vorrichtung nach Anspruch 1, worin das Gehäuse (12) eine elektrisch leitfähige innere Oberfläche (125) aufweist, die als die erste Elektrode (13) arbeitet.

7. Vorrichtung nach Anspruch 6, worin die zweite Elektrode (14) eine Röhre (126) umfasst, die in dem Gehäuse (12) entlang einer Längsachse (O) des Gehäuses (12) angeordnet ist.

8. Vorrichtung nach Anspruch 1, worin eine Teilchenabmessung des leitfähigen, teilchenförmigen Materials (16) in dem Bereich von ungefähr 3 bis ungefähr 5 Millimeter liegt.

9. Vorrichtung nach Anspruch 1, worin der elektrisch betriebene Mixer (18) mehrere Wirbelblätter (182) umfasst, die an der Welle (181) entlang ihrer Längsachse angeordnet sind.

10. Vorrichtung nach Anspruch 1, worin der Abwassereinlassanschluss (114) mit einem Einlassanschlussstück (116) verbunden ist, das mit einem steuerbaren Einlassventil (117) ausgerüstet ist, das zur Regulierung einer Flussrate eines Abwassereinlasses ausgestaltet ist, worin der Gaseinlassanschluss (115) mit einem Gaseinlassanschlussstück (118) verbunden ist, das mit einem steuerbaren Einlassventil (119) ausgerüstet ist, das zur Regulierung einer Flussrate eines Gaseinlasses ausgestaltet ist.

11. Vorrichtung nach Anspruch 1, worin der Abwasserauslassanschluss (171) mit einem Wasserauslassanschlussstück (178) verbunden ist, das mit einem steuerbaren Auslassventil (173) ausgestattet ist, das eine Auslassflussrate des behandelten Abwassers reguliert.

12. Vorrichtung nach Anspruch 1, worin der elektrisch betriebene Mixer (18) einen elektrischen Antrieb (183) umfasst, der zur Drehung der Welle (181) ausgestaltet ist.

13. Verfahren zur Behandlung von industriellem Abwasser, umfassend:
Bereitstellen der Vorrichtung nach einem der vorstehenden Ansprüche;
Bereitstellen eines steuerbaren Einlassflusses des Abwassers durch den Abwassereinlassanschluss (114) in die Einlassmischkammer (11);
Bereitstellen eines steuerbaren Einlassflusses des unter Druck stehenden Gases durch den Gaseinlassanschluss (115) in die Einlassmischkammer (11);
Aktivieren des elektrisch betriebenen Mixers (18), um steuerbares Rühren der Teilchen des leitfähigen, teilchenförmigen Materials (16) bereitzustellen;
Anlegen einer bestimmten elektrischen Spannung an die erste und zweite Elektrode (13 und 14); um die erste und zweite Elektrode (13 und 14) in Kontakt zu bringen, um dadurch elektrische Entladungen zwischen den Teilchen mit Bogenentladungen im Wesentlichen über das gesamte Abwasservolumen bereitstellen, die durch das Gehäuse (12) zwischen der ersten und zweiten Elektrode (13 und 14) verlaufen; und
Ablassen des behandelten Abwassers durch den Abwasserauslassanschluss (171) aus dem Gehäuse.

14. Verfahren nach Anspruch 13, wobei das Aktivieren des elektrisch betriebenen Mixers (18) Drehen der Welle (181) bei einer Geschwindigkeit in dem Bereich von ungefähr 50 bis ungefähr 1000 Umdrehungen pro Minute umfasst.

15. Verfahren nach Anspruch 13 oder 14, wobei die bestimmte elektrische Spannung in dem Bereich von ungefähr 10V bis 40V liegt.

## Revendications

1. Un appareil pour traiter les eaux usées comprenant :
une chambre de mélange d'entrée (11) comportant des parois de chambre tubulaires (111) fixées à un fond de chambre (112) et un sommet de chambre de mélange ouvert (113), les parois de chambre (111) étant équipées d'un portail d'entrée (114) configuré pour recevoir les eaux usées et d'un portail d'entrée de gaz (115) configuré pour recevoir du gaz sous pression et séparé dans l'espace dudit portail d'entrée des eaux usées (114) ;
un boîtier (12) comprenant des parois de boîtier (121), un sommet de boîtier ouverte (123) et un fond de boîtier perforé (124), les parois de boîtier (121) étant fixées à la partie supérieure ouverte (113) de ladite chambre de mélange d'entrée (11) pour ménager une communication hydraulique entre la chambre de mélange d'entrée (11) et le boîtier (12) ;
une première électrode (13) et une seconde électrode (14) disposées à l'intérieur du boîtier (12) et couplées à une source d'alimentation de tension électrique (15) ;
un matériau conducteur particulaire (16) disposé entre les première et seconde électrodes (13 et 14) de sorte à fournir, avec des arcs électriques, des décharges électriques entre les particules, sur pratiquement tout le volume des eaux usées passant au travers du boîtier (12) entre les première et seconde électrodes (13 et 14) ;
une chambre de collecte (17) monté sur le sommet ouvert du boîtier (123) pour ménager une communication hydraulique entre la chambre de collecte (17) et le boîtier (12), ladite chambre de collecte (17) comportant un portail de sortie (171) pour évacuer les eaux usées traitées ; et
un mélangeur électrique (18) comprenant un axe (13) équipé d'au moins une lame tourbillonnante (182) et passant au travers dudit boîtier (12) de sorte que ladite au moins une lame tourbillonnante (182) soit disposée au sein du matériau conducteur particulaire (16).

2. L'appareil de la revendication 1 dans lequel ladite chambre de mélange d'entrée est configurée pour fonctionner comme un mélangeur à cyclone.

3. L'appareil de la revendication 1 dans lequel ladite première électrode (13) comprend une plaque perforée conductrice disposée près du sommet perforé du boîtier (124), perpendiculairement aux parois de boîtier (121).

4. L'appareil de la revendication 3 dans lequel ladite seconde électrode (14) comprend une plaque perforée conductrice disposée parallèlement à la plaque conductrice perforée de la première électrode (13).

5. L'appareil de la revendication 1 dans lequel les première et seconde électrodes (13 et 14) sont des électrodes à grille.

6. L'appareil de la revendication 1 dans lequel ledit boîtier (12) comporte une surface interne électriquement conductrice (125) qui fonctionne comme ladite première électrode (13).

7. L'appareil de la revendication 6 dans lequel ladite seconde électrode (14) comprend un tube (126) disposé à l'intérieur du boîtier (12) le long d'un axe longitudinal (O) du boîtier (12).

8. L'appareil de la revendication 1 dans lequel une dimension des particules dudit matériau particulaire conducteur (16) est de l'ordre d'environ 3 à environ 5 millimètres.

9. L'appareil de la revendication 1 dans lequel ledit mélangeur électrique (18) comporte une pluralité de lames tourbillonnantes (182) disposées sur l'axe (181) selon son axe longitudinal.

10. L'appareil de la revendication 1 dans lequel le portail d'entrée des eaux usées (114) est couplé à un collecteur d'entrée (116) équipé d'une soupape d'entrée contrôlable (117) configurée pour réguler un débit d'entrée des eaux usées, dans lequel le portail d'entrée de gaz (115) est couplé à un collecteur d'entrée de gaz (118) équipé d'une soupape d'entrée contrôlable (119) configurée pour réguler un débit d'entrée du gaz.

11. L'appareil de la revendication 1 dans lequel le portail de sortie des eaux usées (171) est couplé à un collecteur de sortie d'eau (178) équipé d'une soupape de sortie contrôlable (173) configurée pour réguler un débit d'évacuation des eaux usées traitées.

12. L'appareil de la revendication 1 dans lequel ledit mélangeur électrique (18) comprend un moteur électrique (193) configuré pour faire tourner l'axe (181).

13. Un procédé pour traiter des eaux usées industrielles comprenant :
fournir un appareil de l'une des revendications précédentes ;
amener un flux d'entrée d'eaux usées contrôlable dans l'entrée de la chambre de mélange (11) au travers dudit portail d'entrée d'eaux usées (114) ;
amener un flux d'entrée de gaz sous pression contrôlable dans l'entrée de la chambre de mélange (11) au travers dudit portail d'entrée de gaz (115) ;
mettre en mouvement ledit mélangeur électrique (18) pour fournir une agitation contrôlable des particules dudit matériau particulaire conducteur (16) ;
appliquer une tension électrique prédéterminée auxdites première et seconde électrodes (13 et 14) pour mettre en contact lesdites première et seconde électrodes (13 et 14), fournissant ainsi des décharges électriques entre les particules avec des arcs sur pratiquement tout le volume d'eaux usées passant au travers du boîtier (12) entre les première et seconde électrodes (13 et 14) ; et
décharger du boîtier les eaux usées traitées au travers du portail de sortie des eaux usées (171).

14. Le procédé de la revendication 13 dans lequel ladite mise en mouvement du mélangeur électrique (18) comprend la rotation de l'axe (181) à une vitesse située dans la plage d'environ 50 à environ 1000 tours par minute.

15. Le procédé des revendications 13 ou 14 dans lequel ladite tension électrique prédéterminée est située dans la plage d'environ 10V à 40V.
